# EUROPÄISCHE PATENTSCHRIFT

(11) **EP 2 399 794 B1**
(45) Veröffentlichungstag und Bekanntmachung des Hinweises auf die Patenterteilung: **09.01.2013**
(21) Anmeldenummer: 11002277.9
(22) Anmeldetag: 21.03.2011
(51) Int. Cl.: B60T 17/00

(54) **Luftaufbereitungsanlage für ein Fahrzeug**
Air supply device for a vehicle
Installation de préparation de l'air pour un véhicule

(30) Priorität: 24.06.2010 DE 102010024893
(43) Veröffentlichungstag der Anmeldung: 28.12.2011
(73) Patentinhaber: WABCO GmbH, 30453 Hannover (DE)
(72) Erfinder: Pendzich, Kevin, 30161 Hannover (DE)

(56) Entgegenhaltungen:
- DE-A1-102007 050 222
- US-A- 5 678 900

## Beschreibung

Die Erfindung betrifft eine Luftaufbereitungsanlage für ein Fahrzeug, insbesondere Nutzfahrzeug.

Die DE 10 2007 050 222 A1 zeigt eine derartige Luftaufbereitungsanlage. Von einem Kompressor wird Druckluft ausgegeben, über einen Lufttrockner getrocknet (im Allgemeinen auch gefiltert) und nachfolgend über ein Rückschlagventil zu mehreren Verbraucherkreisen gegeben, wobei im Allgemeinen ein Mehrkreisschutzventil vor die mehreren Verbraucherkreise geschaltet ist. Zur Überwachung des bereitgestellten Drucks ist im Allgemeinen ein Drucksensor vorgesehen, z. B. in einer Ausgangsleitung für einen Betriebsbremskreis.

Da der Lufttrockner bzw. die in ihm aufgenommene Kartusche mit Trocknungsgranulat in den Förderphasen Feuchtigkeit aufnimmt, werden Regenerationsphasen zwischengeschaltet, in denen ein Teil der zuvor geförderten Druckluft entgegen der Förderrichtung zurück durch den Lufttrockner zu einem Auslass gefördert wird, um den Lufttrockner wieder zumindest teilweise zu trocknen.

Da in den Regenerationsphasen somit wiederum ein Teil der zuvor geförderten Druckluft verbraucht wird, führen sie zu Energieverbrauch bzw. Treibstoffverbrauch des Fahrzeugs. Somit sollten Regenerationsphasen möglichst nur bei Erfordernis durchgeführt werden, d.h. bei hoher Sättigung des Lufttrockners und somit hoher relativer Feuchtigkeit in der vom Lufttrockner ausgegebenen Druckluft. Hierzu ist es grundsätzlich bekannt, die Feuchtigkeit der durch den Lufttrockner geförderten Druckluft zu messen, so dass die ECU (Steuereinrichtung) der Luftaufbereitungsanlage die Feuchtigkeit durch Einstellung von Regenerationsphasen regeln kann. Problematisch hieran ist jedoch, dass der Feuchtesensor verschiedenen Stoffen ausgesetzt ist, die insbesondere aus dem Schmieröl des Kompressors stammen und der Luft ungewollt beigemischt werden. Diese Stoffe können fest, flüssig oder gasförmig sein und stellen insbesondere langfristig ein Risiko für die Funktionsfähigkeit des Feuchtesensors dar.

Daher werden die verschiedenen Modi bzw. Betriebsphasen einer Luftaufbereitungsanlage im Allgemeinen nach im Vorfeld mechanisch oder elektronisch festgelegten Parametern betrieben, so dass keine Anpassung an die tatsächlichen Betriebsbedingungen erfolgen kann.

Der Erfindung liegt die Aufgabe zugrunde, eine Luftaufbereitungsanlage, ein Druckluftsystem mit einer derartigen Luftaufbereitungsanlage und ein Verfahren zum Überprüfen der Funktionsfähigkeit einer Messeinrichtung bzw. eines Sensors zu schaffen, mit denen eine aktuelle Überprüfung der Funktionsfähigkeit des Sensors ermöglicht wird.

Diese Aufgabe wird durch eine Luftaufbereitungsanlage nach Anspruch 1 sowie ein Verfahren nach Anspruch 13 gelöst. Die Unteransprüche beschreiben bevorzugte Weiterbildungen. Weiterhin ist ein Druckluftsystem mit einer erfindungsgemäßen Luftaufbereitungsanlage und einem Kompressor vorgesehen.

Der Erfindung liegt der Gedanke zugrunde, die Funktionsfähigkeit der Messeinrichtung (bzw. eines weiteren Sensors) auf Grundlage eines Vergleichs mit den Messsignalen des Drucksensors zu überprüfen. Weiterhin kann in diese Überprüfung eine Bewertung des zeitlichen Verhaltens der Messsignale der Messeinrichtung einbezogen werden, wobei insbesondere auch die Zeitpunkte der Ausgabe der Schaltsignale zur Einleitung der verschiedenen Betriebsphasen einbezogen werden können. Hierbei kann insbesondere das zeitliche Verhalten der Messsignale der Messeinrichtung im Zeitraum in und nach der Entlüftung bzw. Einleitung der Regenerationsphase überprüft werden.

Die Messeinrichtung kann erfindungsgemäß als Feuchte- und/oder Temperatursensor ausgelegt sein. Er kann insbesondere ein kombinierter Feuchte- und Temperatursensor sein, der als Messsignal zumindest eine relative Luftfeuchte anzeigt. Weiterhin kann die erfindungsgemäße zusätzliche Messeinrichtung ergänzend als Messsignal die Temperatur bzw. Umgebungstemperatur der Luft anzeigen. Aus diesen beiden Messwerten der relativen Luftfeuchte und der Umgebungstemperatur kann dann insbesondere eine Taupunkttemperatur berechnet werden. Erfindungsgemäß kann dann diese Taupunkttemperatur für die Steuerung der Betriebsphasen herangezogen werden. Hierbei kann insbesondere die Differenz zwischen der Umgebungstemperatur und der Taupunkttemperatur als Taupunktabsenkung ermittelt werden und eine Steuerung der Betriebsphasen durch einen Vergleich des so ermittelten IST-Wertes mit einem SOLL-Wert durchgeführt werden. Somit kann die Steuereinrichtung die Betriebsphasen insbesondere auf Grundlage des Druckmesssignals sowie der Taupunktabsenkung steuern bzw. regeln.

Erfindungsgemäß wird das zweite Messsignal vorzugsweise in einem Zeitraum erfasst und ausgewertet, der eine absichtlich herbeigeführte physikalische Änderung, insbesondere eine Entlüftung und somit einen Entspannungsvorgang der Druckluft betrifft. Die Reaktion der Messeinrichtung auf unterschiedliche Entspannungsvorgänge, also z. B. bei unterschiedlichen Drücken beginnend oder mit unterschiedlicher Luftfeuchtigkeit beginnend, lassen sich in geeigneter Weise als Referenz abspeichern, z. B. in Form eines Kennfeldes.

Die fehlerfreie Referenzkurve bzw. das Sollverhalten kann erfindungsgemäß insbesondere auch bei einer neuwertigen Messeinrichtung erfasst werden, d.h. in den nachfolgenden Entspannungsvorgängen nach Einsetzen der neuen Messeinrichtung. Die ECU kann dann in den nachfolgenden Zeitraum überprüfen, wie weit sich dieses zeitliche Verhalten nachfolgend verändert. Somit kann die ECU nachfolgend eine Kalibrierung vornehmen in dem jeweils die Messungen der Entspannungsvorgänge mit Referenzkurve verglichen werden.
Vorteilhafterweise ist die Anzahl der Messungen von unterschiedlichen Entspannungsvorgängen größer oder gleich der Anzahl der unterschiedlichen Abweichungen und damit der Freiheitsgrade der Gesamtabweichung, um eine eindeutige Festlegung und Beurteilung vorzunehmen. Vorteilhafterweise wird eine Überbestimmung durch eine hohe Anzahl von zur Bewertung herangezogener Entspannungsvorgänge vorgenommen.

Wenn die Steuereinrichtung eine Regenerationsphase einleitet, wird der Bereich vor dem Lufttrockner mit einem Druckauslass verbunden, so dass der Druck auch in dem Bereich hinter dem Lufttrockner schlagartig abfällt. Der Zeitpunkt dieser Entlüftung ist der ECU bekannt, da sie die entsprechenden Schaltsignale an die Magnetventile, im Allgemeinen ein Entlüftungs- bzw. Spülventil und das für die Regeneration vorgesehene Regenerationsventil ausgibt. Das Druckmesssignal kann hierbei direkt zum Vergleich mit dem Messsignal der Messeinrichtung verwendet werden, wenn es im selben Leitungsbereich vorgesehen und nicht durch sperrende Ventile getrennt ist. Da der Drucksensor jedoch auch z. B. hinter dem in der Förderphase offenen und in der Regenerationsphase sperrenden Rückschlagventil vorgesehen sein kann, insbesondere hinter dem Mehrkreisschutzventil in einer Ausgangsleitung zu einem Betriebsbremskreis, kann das Druckmesssignal gegebenenfalls nicht direkt mit dem Messsignal der Messeinrichtung verglichen werden. Es kann jedoch das vor Einleitung der Regenerationsphase aufgenommene Druckmesssignal, d.h. der zu diesem Zeitpunkt bei geöffnetem Rückschlagventil vorliegende Druck in Beziehung zu dem gleichzeitig vorliegenden Messsignal der Messeinrichtung gesetzt werden, um auf dieser Grundlage eine ordnungsgemäße Kurve des zeitlichen Verhaltens des zweiten Messsignals bei der nachfolgenden Entlüftung festzulegen, wobei dieses zeitliche Verhalten dann überprüft werden kann.

Der bei Einleitung einer Regenerationsphase einsetzende plötzliche Abfall im Duck führt im Wesentlichen zu einer adiabatischen Entspannung des Bereichs hinter dem Lufttrockner, so dass auch die Temperatur entsprechend abfällt. In dem Messsignal einer relativen Feuchtigkeit oder auch einer Temperatur sollte somit ein entsprechender Abfall des Messsignals zu erwarten sein. Temperatursensoren ermöglichen zunächst eine höhere Messdynamik und können somit Änderungen der Umgebungsluft relativ zeitnahe folgen. Feuchtesensoren hingegen werden im Allgemeinen kapazitiv ausgelegt, wobei auf z. B. einer Metallfolie eine Feuchtigkeit aufnehmende Beschichtung aufgetragen ist, die Feuchtigkeit in Abhängigkeit der relativen Feuchtigkeit der Umgebungsluft aufnimmt, wobei derartige Feuchtesensoren eine höhere Trägheit bzw. höhere zeitliche Verzögerung gegenüber Änderungen aufweisen. Somit wird insbesondere bei dem Messsignal einer relativen Feuchtigkeit trägheitsbedingt ein langsamerer Abfall zu erwarten sein, wobei der Anfangs- und Endwert von dieser zeitlichen Verzögerung jedoch nicht direkt betroffen sein sollten. Es kann somit eine Referenzkurve für das Messsignal gebildet werden, die eine fehlerfreie Messung als zeitliche Verzögerung der tatsächlichen, eine schnelle Änderung zeigenden Zustandskurve darstellt.

Abweichungen bzw. Änderungen des tatsächlichen Messsignals gegenüber dieser Referenzkurve können dann nachfolgend ermittelt und gegebenenfalls auch zugeordnet bzw. quantifiziert werden. So kann z. B. ein konstanter Offset im Messsignal, der zeitlich im Wesentlichen konstant ist, als zusätzlicher Messbeitrag einer Verschmutzung erkannt werden, die sich auf der Messeinrichtung niedergeschlagen hat. Weiterhin können stärkere zeitliche Verzögerungen einer Verschmutzung zugeordnet werden, die gegebenenfalls noch die Aufnahme der Feuchtigkeit ermöglicht, diese jedoch zeitlich verzögert. Weiterhin können teilweise Ausfälle der Messfläche der Messeinrichtung bzw. ihres Feuchtesensors auch als faktorielle Abweichung erkannt werden. Somit können erfindungsgemäß Abweichungen, insbesondere auch Überlagerungen verschiedener Abweichungen, nachfolgend anhand spezifischer charakteristischer Eigenschaften der Messkurve erkannt und gegebenenfalls quantifiziert werden.

In Abhängigkeit der Bewertung des Messsignals können nachfolgend unterschiedliche Maßnahmen ergriffen werden. Es kann z. B. eine Reinigungsfunktion gestartet werden, z. B. durch Aufheizen der Messeinrichtung oder eines Teils von ihr, z. B. ihres Feuchtesensors oder andere Maßnahmen. Weiterhin können Korrekturen der Messwerte bzw. eine Justierung der Messeinrichtung vorgenommen werden, wenn eine systematische Abweichung erkannt wird und weiterhin festgestellt wird, dass diese Korrektur bzw. Justierung unproblematisch ist und keine Gefährdung hervorruft. Weiterhin kann bei Feststellen einer zu starken Beeinträchtigung des Messsignals auch ein Fehler bzw. Versagen der Messeinrichtung festgestellt werden, so dass dessen Messwerte nicht mehr zur Einstellung der Regenerationsphase herangezogen werden und z. B. wiederum ein Kennlinienfeld ohne Verwendung dieser Messsignale eingesetzt wird.

Die Erfindung wird im Folgenden anhand der beiliegenden Zeichnungen an einigen Ausführungsformen näher erläutert. Es zeigen:
- Fig. 1: ein Blockschaltbild einer Luftaufbereitungsanlage; und
- Fig. 2: ein Zeitdiagramm verschiedener Messsignale der relativen Feuchtigkeit.

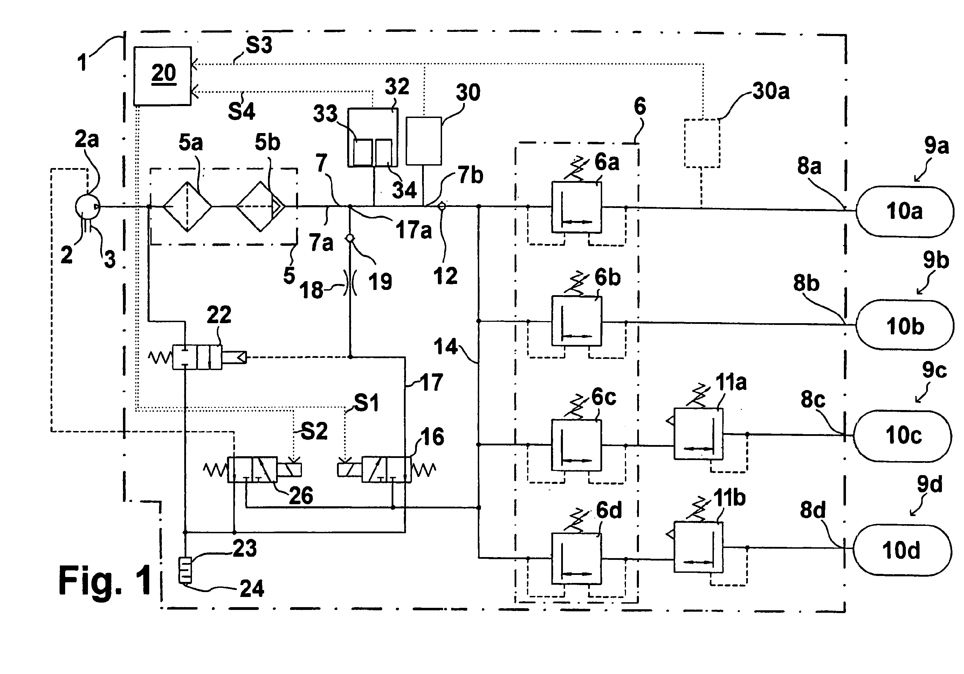

Eine in Figur 1 gezeigte Luftaufbereitungsanlage 1 ist zum Einsatz in einem Nutzfahrzeug, z. B. einem Lastkraftwagen vorgesehen und mit ihrem Drucklufteingang 4 an einen Kompressor 2 des Lastkraftwagens angeschlossen. Der Kompressor 2 ist auf einer Motorwelle 3 angeordnet und wird somit direkt durch einen hier nicht gezeigten Fahrzeug-Motor angetrieben. Der Kompressor 2 weist einen pneumatischen Steuereingang 2a auf, durch den er umschaltbar ist zwischen einem Förder-Zustand, indem er im Motorraum des Fahrzeugs aufgenommene Luft komprimiert und auf den Drucklufteingang 4 der Luftaufbereitungsanlage 1 ausgibt, sowie einem Ruhezustand, in dem er entweder von der Motorwelle 3 ausgekuppelt ist oder im Leerlaufbetrieb, d.h. ohne Druckbeaufschlagung des Drucklufteingangs 4, mitläuft. Bei drucklosem Steuereingang 2a des Kompressors 2 wird der Förder-Zustand eingestellt, entsprechend bei Druckbeaufschlagung der Ruhezustand.

Die Luftaufbereitungsanlage 1 weist einen an den Drucklufteingang 4 angeschlossenen Lufttrockner 5 mit z. B. einem Filter 5a sowie einer Trocknerkartusche 5b zum Trocknen der zugeführten Druckluft und eine Vierkreis - Schutzventileinrichtung 6 auf, an das Druckluft-Ausgänge 8a, 8b, 8c, 8d der Luftaufbereitungsanlage 1 für die verschiedenen Verbraucherkreise 9a bis 9d angeschlossen sind, die z. B. zwei Betriebsbremskreise 9a, 9b, einen Anhänger-/Feststellbremskreis 9c und ein Nebenverbraucherkreis 9d darstellen und jeweils einen Druckluftbehälter 10a bis 10d zur Zwischenspeicherung der zugeführten Druckluft aufweisen.

Zwischen dem Lufttrockner 5 und der Vierkreis -Schutzventileinrichtung 6 ist ein Rückschlagventil 12 angeordnet, an das sich eine Versorgungsleitung 14 zum Anschluss der vier Eingänge der Vierkreis - Schutzventileinrichtung 6 anschließt. In einer Förderphase der Luftaufbereitungsanlage 1 fördert der Kompressor 2 somit Druckluft über den Drucklufteingang 4 und den Lufttrockner 5 sowie das Rückschlagventil 12 und die \/ersorgungsleitung 14 an die Eingänge der Vierkreis -Schutzventileinrichtung 6, die in an sich bekannter Weise jeweils ein Überstromventil 6a, 6b, 6c, 6d für die jeweilige Verbraucherkreise aufweist, wobei ergänzend Druckbegrenzungsventile 11a und 11b für die Verbraucherkreise 9c und 9d vorgesehen sind.

In den Förderphasen erhöht sich somit die im Lufttrockner 5 aufgenommene Feuchtigkeit. Figur 1 zeigt den Schaltzustand einer derartigen Förderphase.

Zur Regeneration des Lufttrockners 5 werden zeitweise Regenerationsphasen zwischengeschaltet. Die Umschaltung zwischen den Förderphasen, Regenerationsphasen sowie ggf. weiteren Phasen erfolgt über eine Steuereinrichtung (ECU) 20, die hierzu elektrische Schaltsignale S1 und S2 an ein Regenerations-Magnetventil 16 und ein Kompressor-Magnetventil 26 ausgibt und ein Druckmesssignal S3 von einem Drucksensor 30 oder 30a sowie ein zweites Messsignal S4 von einer Messeinrichtung 32 aufnimmt. Die in Fig. 1 gezeigte Förderphase entspricht somit den Signalzuständen S1=S2=0.

Zur Einleitung einer Regenerationsphase gibt die Steuereinrichtung 20 das erste elektrische Schaltsignal S1 an das Regenerationsmagnetventil 16 und das zweite elektrische Schaltsignal S2 an das als 3/2-Wegeventil ausgebildete Kompressor-Magnetventil 26 aus, d.h. es wird S1=S2= 1 gesetzt. Durch das Schaltsignal S2 wird das Kompressor-Magnetventil 26 von seinem gezeigten Grundzustand, in dem es den pneumatischen Steuereingang 2a des Kompressors über einen Schalldämpfer 23 an einen Druckluft-Auslass 24 legt und somit den Kompressor 2 in dessen Förder-Zustand hält, in seinen betätigten Zustand durchgeschaltet, in dem es den Steuergang 2a des Kompressors 2 an die unter Druck stehende Versorgungsleitung 14 legt und somit den Kompressor 2 ausschaltet. Die geförderte Druckluft wird aus dem Bereich hinter dem Rückschlagventil 12, d. h. insbesondere aus der Versorgungsleitung 14, über das durchgeschaltete Regenerations- Magnetventi! 16 auf eine Rückführleitung 17 ausgegeben, die über eine als Drossel wirkende Blende 18 und ein Rückschlag-Ventil 19 an die Leitung 7 zwischen dem Lufttrockner 5 und dem Rückschlagventil 12 angeschlossen ist. Über die Rückführleitung 17 wird weiterhin der pneumatische Steuereingang eines Entlüftungs-/Spülventils 22 betätigt, das als 2/2-Wegeventil ausgebildet ist und bei Betätigung von seinem in Figur 1 gezeigten sperrenden Grundzustand in Durchlassstellung umschaltet, in der es den Drucklufteingang 4 über den Schalldämpfer 23 mit dem Druckluft-Auslass 24 verbindet.

Somit fließt in der Regenerationsphase Druckluft von der Versorgungsleitung 14, in der die Druckluft durch das sperrende Rückschlagventil 12 gehalten wird, über das durchgeschaltete Regenerationsmagnetventil 16 und die Rückführleitung 17 , sowie die Drossel 18 und das zweite Rückschlagventil 19 zurück in die Leitung 7 und in Gegenrichtung durch den Lufttrockner 5, um diesen wieder teilweise zu trocknen, sowie nachfolgend über das geöffnete Entlüftungs-/Spülventil 22 und den Schalldämpfer 23 zum Druckluft-Auslass 24.

Vorteilhafterweise können auch weitere Phasen vorgesehen sein, z. B. eine Leerlauf-Phase, in der nur das zweite Schaltsignal S2, nicht jedoch das erste Schaltsignal S1 ausgegeben wird, d.h. S2=1 und S1=0, so dass lediglich das Kompressor-Magnetventil 26 durchgeschaltet wird, nicht jedoch das Regenerationsmagnetventil 16. Somit wird der Kompressor 2 ausgeschaltet, ohne eine Regeneration einzuleiten. Weiterhin kann z. B. ein Cold Mode vorgesehen sein, in dem das Kompressor-Magnetventil 26 nicht betätigt wird, d. h. S2 = 0 und somit Kompressor 2 im Förderzustand, und S1 = 1, d. h. mit durchgeschaltetem Regenerations-Magnetventil 16, um das Entlüftungs-/Spülventil 22 durchzuschalten, damit der Drucklufteingang 4 direkt über das geöffnete Entlüftungs-/Spülventil 22 und den Schalldämpfer 23 an den Druckluft-Auslass 24 gelegt wird; in diesem Cold Mode kann evtl. im Bereich des Drucklufteingangs 4, d. h. zwischen dem Kompressor 2 und dem Lufttrockner 5 angesammelte Feuchtigkeit direkt mit der vom Kompressor 2 geförderten Druckluft an den Druckluft-Auslass 24 abgegeben werden. Da der Kompressor 2 fördert, sperrt das Rückschlagventil 19, wobei die über die Rückführleitung 17 und die Blende 18 auf das Rückschlagventil 19 einwirkende Druckluft einen geringeren Druck aufweist und dieses nicht gegen den arbeitenden Kompressor 2 öffnen kann.

Gemäß einer Ausführungsform kann ein Drucksensor 30 in der Leitung 7, d.h. vor dem Rückschlagventil 12 angeordnet sein; alternativ hierzu kann ein gestrichelt eingezeichneter Drucksensor 30a hinter dem Rückschlagventil 12, z. B. hinter der Vierkreis-Schutzventileinrichtung 6 vor dem Ausgang 8a für den Betriebsbremskreis 9a. Durch das Druck-Messsignal S3 kann die Steuereinrichtung 20 abschätzen, ob die Einleitung einer Förderphase erforderlich ist oder eine Leerlauf-Phase ausreichend ist.

Die Messeinrichtung 32 weist einen Temperatursensor 33 zur Messung einer Temperatur T und/oder einen Feuchtesensor 34 zur Messung eines Feuchtegehaltes bzw. Feuchtigkeitsgehaltes F auf. Nachfolgend wird insbesondere die Ausführungsform beschrieben, in der beide Sensoren 33, 34 vorgesehen sind. Hierbei kann z. B. ein zweites Messsignal S4 für die relative Feuchte bzw. relative Feuchtigkeit ausgegeben werden, die einen temperaturabhängigen Wert darstellt. Weiterhin können auch beide Signale oder ein oder mehrere aus diesen Signalen ermittelte Signale ausgegeben werden. Erfindungsgemäß kann insbesondere aus den beiden Messsignalen der relativen Luftfeuchte und der Umgebungstemperatur eine Taupunkttemperatur bzw. ein Taupunkttemperatursignal Tdp berechnet werden. Erfindungsgemäß kann dann diese Taupunkttemperatur für die Steuerung der Betriebsphasen herangezogen werden. Hierbei kann insbesondere die Differenz zwischen der Umgebungstemperatur und der Taupunkttemperatur als Taupunktabsenkung ermittelt werden und eine Steuerung der Betriebsphasen durch einen Vergleich des so ermittelten IST-Wertes mit einem SOLL-Wert durchgeführt werden. Somit kann die Steuereinrichtung die Betriebsphasen insbesondere auf Grundlage des Druckmesssignals sowie der Taupunktabsenkung steuern bzw. regeln.

Die Leitung 7 zwischen dem Lufttrockner 5 und dem Rückschlagventil 12 wird durch zwei Leitungsbereiche 7a und 7b gebildet, wobei der vordere Leitungsbereich 7a zwischen dem Lufttrockner 5 und einem Anschlusspunkt 17a des zweiten Rückschlagventils 19 (bzw. der über die Blende 18 und das Rückschlagventil 19 angeschlossenen Druckluft-Leitungl 7 für die Regeneration-Rückführung) und einen hinteren Leitungsbereich 7b zwischen diesem Anschlusspunkt 17a und dem Rückschlagventil 12. Die Messeinrichtung 32 und der Drucksensor 30 sind vorteilhafterweise in diesem hinteren Leitungsbereich 7b angeordnet, der in der Regenerationsphase nicht direkt durchströmt wird, so dass in der Regenrationsphase keine Beeinflussung der Messung durch die dynamische Rückströmung erfolgt. Grundsätzlich ist allerdings auch eine Anordnung im vorderen Leitungsbereich 7a möglich.

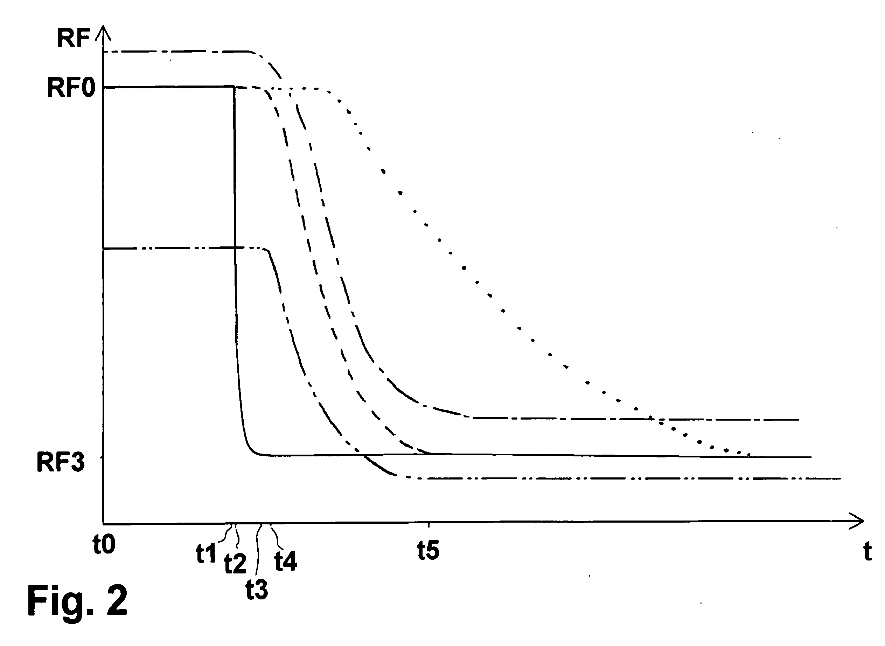

Die Steuereinrichtung 20 setzt hierbei die Messsignale S3 einerseits und S4 zueinander in Beziehung, um die Funktionsfähigkeit der Messeinrichtung 32 bzw. ihrer Sensoren 33 und 34 zu beurteilen. Hierbei werden die Messsignale in den verschiedenen Phasen betrachtet, insbesondere gemäß Figur 2 beim Übergang von einer Förder- in die Regenerationsphase, wie nachfolgend beschrieben wird.

In Figur 2 ist auf der Abszisse die Zeit t eingezeichnet, auf der Ordinate die relative Feuchtigkeit RF, die den temperaturabhängigen Sättigungsgrad bzw. Feuchtigkeitsgrad der gemessenen Druckluft wiedergibt. Diese relative Feuchtigkeit RF kann aus dem Messsignal des Feuchtesensors 34 ermittelt werden. Das von der Messeinrichtung 32 an die Steuereinrichtung 20 ausgegebene Messsignal S4 kann direkt diese relative Feuchtigkeit RF wiedergeben, oder die Messwerte von T und RF enthalten, aus denen dann in der Steuereinrichtung 20 der Taupunkt ermittelt wird. Alternativ hierzu kann auf der Ordinate auch die Temperatur T aufgetragen werden.

Der Feuchtesensor 34 ist z. B. als kapazitiver Sensor ausgebildet, wobei derartige kapazitive Sensoren zur Feuchtmessung als solche grundsätzlich bekannt sind. Hierbei ist z. B. eine Folie geeignet beschichtet, insbesondere mit einer wasseraufnehmenden Schicht, die in Abhängigkeit der Umgebungsfeuchte ihren Feuchtegehalt ändert und hierdurch die Kapazität der Anordnung aus Folie und Schicht ändert. Da somit jeweils eine Sättigung der Schicht mit der Feuchtigkeit erforderlich ist, weisen derartige Feuchtesensoren im Allgemeinen eine höhere Trägheit bzw. ein zeitlich verzögertes Ansprechverhalten gegenüber Temperatursensoren und Drucksensoren auf.

In Fig. 2 ist als durchgezogene Idealkurve K1 ein tatsächlicher Zustandswert eingezeichnet, der unter der Annahme von adiabatischen Zustandsänderungen in der Leitung 7 dem Druck P proportional ist.

Zum Zeitpunkt t0 liegt zunächst noch eine Förderphase vor, so dass in der Leitung 7 der hohe Förderdruck des Kompressors 2 vorliegt; entsprechend ergibt sich eine hohe relative Feuchtigkeit RF0 von z. B. 60 %; wird die Temperatur T aufgetragen, ergibt sich entsprechend eine hohe Temperatur T0. Zum Zeitpunkt t1 wird die Förderphase beendet und die Entlüftung eingeleitet, d. h. in die Regenerationsphase umgeschaltet, indem die Steuereinrichtung 20 die Schaltsignale S1 und S2 ausgibt, so dass der Kompressor 2 ausgeschaltet wird und das Entlüftungs-/Spülventil 22 in seine Durchlassstellung umgeschaltet wird. Somit wird der Bereich des Drucklufteingangs 4 schlagartig entlüftet bzw. der Druck abgesenkt, was mit allenfalls kurzer zeitlicher Verzögerung auch zu einem Abfall des Drucks P in der Leitung 7 führt. Die über die Rückführleitung 17 zu der Leitung 7 rückgeführte Druckluft ist aufgrund der Entspannung in der Blende 18 deutlich geringer, so dass in der Leitung 7 nachfolgend ein geringer Druck verbleibt. Wenn in Fig. 1 der Drucksensor 3a vorgesehen ist, kann direkt dessen Druckmesssignal S3 herangezogen werden, um von dem Wert RF0 ausgehend die Idealkurve K1 nachzubilden. Da der Drucksensor 30 mit hoher Dynamik bzw. zeitlich schnell anspricht, ergibt sich somit eine Messkurve mit starkem Abfall von dem Zeitpunkt t1 bis zu einem Zeitpunkt t2 und nachfolgend ein Bereich von t2 bis t3 mit etwas schwächerem Abfall, bis in t3 eine im Wesentlichen stationärer Wert des Drucks erreicht wird. Die Idealkurve K1 nimmt ab t3 (oder auch etwas später) somit den Endwert RF3 an.

Falls lediglich der Drucksensor 30a vorgesehen ist, kann dessen Druckmesswert in der Förderphase mit dem Wert RF0 in Beziehung gesetzt werden und aus diesem Druckmesswert eine Idealkurve bzw. Kennlinie K1 für den nachfolgenden Druckabfall in der Regenerationsphase berechnet werden, die mit dem Messwert RF oder T verglichen werden kann. Hierbei ist der Zeitpunkt t1 bekannt, da die Steuereinrichtung 20 zu diesem Zeitpunkt die Schaltsignale S1 und S2 ausgibt. Somit kann die Idealkurve K1 nachgebildet werden.

Erfindungsgemäß wird erkannt, dass die Messeinrichtung 32 eine deutlichere zeitliche Verzögerung bei der Messung der Entlüftung aufweisen kann und somit die Idealkurve K1 im Messsignal S4 nicht erreicht wird. Es ist bei einer fehlerfreien Messeinrichtung 32 aufgrund der Trägheit der Messung vielmehr die fehlerfreie Kurve K2 zu erwarten, die als gestrichelte Linie eingezeichnet ist und z. B. ab einem späteren Zeitpunkt t4 abfällt und zu einem weiteren Zeitpunkt t5 den unteren Wert RF3 erreicht, der z. B. einer relativen Feuchtigkeit von 10 Prozent entspricht.

Hierbei kann die Kurve K2 insbesondere auch bei einer neu eingesetzten Messeinrichtung 32 aufgenommen und abgespeichert werden, da hier noch keine Verschmutzungen zu erwarten sind.

Fehler bzw. Beeinträchtigungen der Messeinrichtung 32 können zu verschiedenen fehlerhaften Messkurven führen. Mit K3 ist als punktierte Kurve eine mögliche Messung gezeigt, bei der aufgrund z. B. einer Verschmutzung der Messeinrichtung 32 mit Öl oder anderen Rückständen eine zeitliche verzögerte Messung erfolgt. Somit fällt die gepunktete Kurve K3 erst zu eine späteren Zeitpunkt und dann mit vom Betrag her geringerer Steigung bzw. über einen längeren Zeitraum ab, bis sie z. B. wiederum den unteren Endwert RF3 erreicht. Bei einer derartigen Verschmutzung der Messeinrichtung 32 werden somit der untere Messwert RF3 und der obere Messwert RF0 jeweils erreicht, wobei die Übergänge eine deutliche zeitliche Verzögerung aufweisen.

K4 zeigt als strichpunktierte Kurve die Messung bei einem konstanten Offset von z. B. 5 Prozent, so dass hier eine systematische Erhöhung bzw. ein Offset des Messsignals vorliegt und K4 somit konstant oberhalb der fehlerfreien Kurve K2 verläuft. Bei Kenntnis kann diese Aufsetzung mit herausgerechnet werden.

Die strich-doppelpunktierte Kurve K5 bezeichnet eine faktorielle Abweichung, z. B. mit dem Faktor 0,66 gegenüber der fehlerfreien Kurve K2. Somit verläuft die Linie K5 mit diesem konstanten Faktor unterhalb der fehlerfreien Kurve K2. Eine derartige faktorielle Abweichung kann sich z. B. ergeben, wenn ein Teil der Messfläche der Messeinrichtung 32 bzw. des Feuchtesensors 34, durch eine Verschmutzung belegt ist und kein Messsignal bzw. keinen Beitrag zum Messsignal liefert.

Wenn von der Messeinrichtung 32 somit eine aktuelle Messkurve ermittelt wird, kann diese zunächst daraufhin überprüft werden, ob sie mit der fehlerfreien Kurve K2 übereinstimmt, die aus dem Druckmesssignal S3 gebildet wird. Hierbei kann z. B. eine Abweichung um einen relativen Wert oder faktoriellen Wert innerhalb vorgegebener Grenzen als ordnungsgemäß akzeptiert werden. Falls sich keine hinreichende Übereinstimmung ergibt, kann überprüft werden, ob die Messkurve sich als eine der Kurven K3 bis K5 oder als Überlagerung dieser Kurven K3 bis K5 darstellen lässt.

So kann z. B. eine Überlagerung der Kurven K4 und K5 dazu führen, dass zwischen t0 und t1 in etwa die relative Feuchtigkeit RF0 erreicht wird, wodurch zunächst ein ordnungsgemäßer Wert vorgetäuscht wird. In diesem Fall ist jedoch zu erwarten, dass die fehlerhafte Messkurve sich nach t1 von der fehlerfreien Kurve K2 unterschiedet, da der Anteil der Kurve K5 proportional mit K2 abfällt, hingegen die Kurve K4 einen konstanten Offset zeigt, so dass die überlagerte Messkurve nachfolgend höher als die fehlerfreie Kurve K2 verlaufen sollte.

Ergänzend kann ggf. auch eine quantitative Untersuchung erfolgen, zu welchem Anteil welche fehlerhaften Messkurven K3 bis K5 überlagert sind.

Somit nimmt die Steuereinrichtung 20 die Messsignale S3 und S4 auf, und vergleicht das zeitliche Verhalten der Messsignale miteinander bzw. das Druckmesssignal S3 mit einer aus S4 ermittelten relativen Feuchtigkeit RF, vorzugsweise unter Hinzuziehung der Kenntnis des Zeitpunkts t1, um die Funktionsfähigkeit der Messeinrichtung 32 bzw. der Sensoren 33 und 34 zu überprüfen.

In Abhängigkeit der Auswertung bzw. des Vergleichs der aktuellen Messkurve mit der fehlerfreien Messkurve K2 können nachfolgend verschiedene Maßnahmen ergriffen bzw. Signale ausgegeben werden. Erfindungsgemäß erfolgt vorteilhafterweise eine Kalibrierung, indem die Messungen der Entspannungsvorgänge mit der als Soll-Kurve dienenden fehlerfreien Messkurve K2 verglichen werden. Falls die Messeinrichtung 32 als ordnungsgemäß eingeschätzt wird, kann die ermittelte relative Feuchtigkeit RF direkt zur Umschaltung zwischen den Phasen verwendet werden, d. h. insbesondere zur Ermittlung, ob eine Regenerationsphase einzuleiten ist, da die relative Feuchtigkeit einen oberen Grenzwert überschritten hat.

Wird in der Kalibrierung eine deutliche Abweichung der Messkurve von K2 festgestellt, können in Abhängigkeit von der Schwere dieser Abweichung unterschiedliche Maßnahmen ergriffen werden. Zunächst kann eine Reinigungsfunktion aufgerufen werden, z. B. durch Einleitung einer längeren Regenrationsphase oder auch einer internen Reinigungsfunktion der Messeinrichtung 32, z. B. mittels einer Heizeinrichtung. Falls eine kleinere Abweichung zurückbleibt, kann diese rechnerisch korrigiert werden, wodurch somit eine Justierung des Sensors erfolgt. Dies kann insbesondere bei Feststellung eines nicht zu großen Offsets gemäß Kurve K4 oder auch einer nicht zu hohen faktoriellen Abweichung gemäß Kurve K5 erfolgen.

Überschreitet die Abweichung einen hierfür vorgesehenen oberen Grenzwert, kann die Auswirkung der Messwerte S3, S4 auf den Algorithmus der Steuereinrichtung 20 für die Luftaufbereitungsanlage 1 reduziert oder ein zusätzlicher Sicherheitsfaktor eingerechnet werden. Somit kann z. B. auch bei Anzeige eines geringen Feuchtegrades vorgesehen sein, dass auf zehn oder fünfzehn Zeiteinheiten einer Förderphase jeweils eine Zeiteinheit einer Regenerationsphase eingeleitet wird, auch wenn das S4 noch keine zu hohe Feuchtigkeit anzeigt.

Bei sehr gravierenden Abweichungen kann die Nutzung des Messwerts S4 deaktiviert werden, so dass der sicheren Funktion der Luftaufbereitungsanlage 1 der Vorzug gegeben wird vor dem möglichen Effizienzgewinn. Ergänzend kann von der Steuereinrichtung 20 ein Fehlersignal ausgeben werden, um den Fehler der Messeinrichtung 32 anzuzeigen, so dass diese ggf. zu einem späteren Zeitpunkt, z. B. mit dem Wechsel der Trocknerkartusche 5b des Luftdrucktrockners 5, erneuert werden kann.

## Patentansprüche

1. Luftaufbereitungsanlage (1) für ein Fahrzeug, wobei die Luftaufbereitungsanlage (1) aufweist:
einen Drucklufteingang (4) zum Anschluss eines Kompressors (2),
einen Lufttrockner (5) zum Trocknen der über den Drucklufteingang (4) eingegebenen Druckluft,
einen Drucksensor (30, 30a) zum Messen eines Luftdrucks (P) und Erzeugen eines Druckmesssignals (S3), und
eine Steuereinrichtung (20) zur Aufnahme des Druckmesssignals (S3), und Steuerung der Betriebsphasen der Luftaufbereitungsanlage (1),
wobei die Luftaufbereitungsanlage (1) betreibbar ist in mindestens folgenden Betriebsphasen:
einer Förderphase zum Fördern von Luft mit einem höheren Druck durch den Lufttrockner (5) und
einer Regenerationsphase zum Regenerieren des Lufttrockners (5) durch Ablassen von Luft mit einem niedrigeren Druck durch den Lufttrockner (5),
**dadurch gekennzeichnet, dass**
in einem Bereich (7) hinter dem Lufttrockner (5) eine Messeinrichtung (32) zur Messung eines vom Druck verschiedenen Zustandswertes der Druckluft und zur Erzeugung mindestens eines zweiten Messsignals (S4) und Ausgabe des zweiten Messsignals (S4) an die Steuereinrichtung (20) vorgesehen ist, und
die Steuereinrichtung (20) aus einem Vergleich des Druckmesssignals (S3) und des zweiten Messsignals (S4) einen Zustand der Messeinrichtung (32) beurteilt.

2. Luftaufbereitungsanlage (1) nach Anspruch 1, **dadurch gekennzeichnet, dass** die Steuereinrichtung (20) bei Ermittlung einer hinreichenden Funktionsfähigkeit der Messeinrichtung (32) das zweite Messsignal (S4) oder ein aus dem zweiten Messsignal (S4) gebildetes Signal, z. B. ein Taupunktabsenkungs-Signal, zur Steuerung der Betriebsphasen der Luftaufbereitungsanlage (1) heranzieht.

3. Luftaufbereitungsanlage (1) nach Anspruch 1 oder 2, **dadurch gekennzeichnet, dass** die Messeinrichtung (32) einen Temperatursensor (33) und/oder einen Feuchtesensor (34) aufweist und der gemessene zweite Zustandswert der Druckluft ein absoluter oder relativer Feuchtigkeitsgehalt (F, RF) und/oder eine Temperatur (T) ist.

4. Luftaufbereitungsanlage (1) nach einem der vorherigen Ansprüche, **dadurch gekennzeichnet, dass** zwischen dem Lufttrockner (5) und einem Mehrkreisschutzventil (6) zum Anschluss von Druckluftverbraucherkreisen (9a, b, c, d) ein in Förderrichtung durchlässiges erstes Rückschlagventil (12) vorgesehen ist, und die Messeinrichtung (32) an eine Leitung (7) zwischen dem Lufttrockner (5) und dem ersten Rückschlagventil (12) angeschlossen ist.

5. Luftaufbereitungsanlage (1) nach Anspruch 4, **dadurch gekennzeichnet, dass** sie eine Rückführleitung (17) zur Rückführung von Luft in der Regenerationsphase aufweist, wobei die Rückführleitung (17) zwischen einem in der Regenerationsphase geöffneten Ventil (16) und der Leitung (7) geschaltet ist und ein zweites Rückschlagventil (19) aufweist, das in der Regenerationsphase durchlässig ist und in der Förderphase sperrt, wobei die Messeinrichtung (32) in einem hinteren Leitungsbereich (7b) der Leitung (7) zwischen einem Anschlusspunkt (17a) der Rückführleitung (17) an die Leitung (7) und dem ersten Rückschlagventil (12) angeordnet ist.

6. Luftaufbereitungsanlage (1) nach einem der vorherigen Ansprüche, **dadurch gekennzeichnet, dass** die Steuereinrichtung (20) ein zeitliches Verhalten des zweiten Messsignals (S4) mit einer Referenzkurve (K2) vergleicht, die aus dem Vergleich mit dem Druckmesssignal (S3) und/oder gespeicherten Daten gebildet ist, und aus diesem Vergleich den Zustand der Messeinrichtung (32) beurteilt.

7. Luftaufbereitungsanlage nach Anspruch 6, **dadurch gekennzeichnet, dass** die Steuereinrichtung bei einer Abweichung des zweiten Messsignals (S4) von der Referenzkurve (K2) überprüft, ob eine der folgenden Abweichungen oder eine Überlagerung der folgenden Abweichungen vorliegt:
eine additiv um einen Offset verschobene Kurve (K4),
eine zeitlich verzögerte Kurve (K3), die einen zeitlich verzögerten Beginn einer Signaländerung und/oder größeren Zeitraum der Signaländerung bei im Wesentlichen gleichen Anfangs- und Endwerten wie die Referenzkurve (K2) aufweist, und/oder
eine Kurve (K5) mit faktorieller Abweichung, die in dem ermittelten Zeitbereich gegenüber der Referenzkurve (K2) eine im Wesentlichen gleiche faktorielle Abweichung aufweist.

8. Luftaufbereitungsanlage nach Anspruch 6 oder 7 **dadurch gekennzeichnet, dass** die Steuereinrichtung (20) überprüft, ob das aufgenommene zweite Messsignal (S4) von der Referenzkurve (K2) eine Abweichung innerhalb eines vorgegebenen Toleranzbereichs aufweist und in dem Fall, dass die Abweichung außerhalb des Toleranzbereichs ist, überprüft, ob für das zweite Messsignal (S4) eine Kompensation oder Justage durchführbar ist.

9. Luftaufbereitungsanlage nach einem der Ansprüche 6 bis 8, **dadurch gekennzeichnet, dass** der Drucksensor (30) in Förderrichtung vor dem ersten Rückschlagventil (12) vorgesehen ist, wobei das zeitliche Verhalten des Druckmesssignals (S3) als eine Idealkurve (K1) verwendbar ist, aus der die Referenzkurve (K2) durch zeitliche Verzögerung bildbar ist.

10. Luftaufbereitungsanlage nach einem der Ansprüche 1 bis 8, **dadurch gekennzeichnet, dass** der Drucksensor (30a) in Förderrichtung hinter dem ersten Rückschlagventil (12) vorgesehen ist und die Steuereinrichtung (20) das Druckmesssignal (S3) vor Einleitung der Regenerationsphase zur Ermittlung einer Idealkurve (K1) heranzieht.

11. Luftaufbereitungsanlage nach einem der vorherigen Ansprüche, **dadurch gekennzeichnet, dass** die Steuereinrichtung (20) den Zeitpunkt (t1) der Ausgabe eines die Regenerationsphase einleitenden Schaltsignals (S1) als Zeitpunkt (t1) eines Druckabfalls sowie Änderung des zweiten Messsignals (S4) heranzieht und überprüft, welches Verhalten das zweite Messsignal (S4) bei und/oder nach diesem Zeitpunkt (t1) aufweist.

12. Druckluftsystem, das aufweist:
eine Luftaufbereitungsanlage (1) nach einem der vorherigen Ansprüche, und
einen an den Drucklufteingang (4) der Luftaufbereitungsanlage (1) angeschlossenen Kompressor (2).

13. Verfahren zur Überprüfung der Funktionsfähigkeit einer Messeinrichtung (32) zur Messung einer relativen Feuchtigkeit (RF) und/oder einer Temperatur (T) und/oder eines relativen Feuchtegehaltes (F) in einer Luftaufbereitungsanlage nach einem der Ansprüche 1 bis 11, mit mindestens folgenden Schritten
Aufnehmen des Druckmesssignals (S3) des Drucksensors (30, 30a) Aufnahmen eines zweiten Messsignals (S4) der zweiten Messeinrichtung (32), und
Vergleich des zeitlichen Verhaltens des zweiten Messsignals (S4) mit dem Druckmesssignal (S3).

14. Verfahren nach Anspruch 13, **dadurch gekennzeichnet, dass** in die Beurteilung der Funktionsfähigkeit der zweiten Messeinrichtung (32) weiterhin der Zeitpunkt (t1) einer Einleitung einer Regenerationsphase einbezogen wird.

15. Verfahren nach Anspruch 13 oder 14, **dadurch gekennzeichnet, dass** für die Beurteilung der Funktionsfähigkeit der zweiten Messeinrichtung (32) eine Referenzkurve (K2) gebildet wird, die eine zeitliche Verzögerung gegenüber einer Änderung des Druckmesssignals (S3) aufweist und/oder aus gespeicherten zweiten Messsignalen (S4) von ersten Messungen bei Beginn des Einsatzes der zweiten Messeinrichtung (32) gebildet wird.

16. Verfahren nach einem der Ansprüche 13 bis 15, **dadurch gekennzeichnet, dass** das zweite Messsignal (S4) in Abhängigkeit des Vergleichs kompensiert, korrigiert oder nicht zur Steuerung der Betriebsphasen herangezogen wird.

## Claims

1. Air supply device (1) for a vehicle, wherein the air supply device (1) has:
a compressed air inlet (4) for connecting a compressor (2), an air dryer (5) for drying the compressed air which is input via the compressed air inlet (4),
a pressure sensor (30, 30a) for measuring an air pressure (P) and generating a pressure-measurement signal (S3), and
a control device (20) for picking up the pressure-measurement signal (S3) and controlling the operating phases of the air supply device (1), wherein
the air supply device (1) can be operated in at least the following operating phases:
a delivery phase for delivering air at a relatively high pressure through the air dryer (5), and
a regeneration phase for regenerating the air dryer (5) by discharging air at a relatively low pressure through the air dryer (5),
**characterized in that**
in a region (7) behind the air dryer (5) a measuring device (32) for measuring a state value of the compressed air which is different from the pressure and for generating at least one second measurement signal (S4) and outputting the second measurement signal (S4) to the control device (20) is provided, and
the control device (20) assesses a state of the measuring device (32) on the basis of a comparison with the pressure-measurement signal (S3) and of the second measurement signal (S4).

2. Air supply device (1) according to Claim 1, **characterized in that** when a sufficient functional capability of the measuring device (32) is determined the control device (20) uses the second measurement signal (S4) or a signal which is formed from the second measurement signal (S4), for example a dew-point-reduction signal, to control the operating phases of the air supply device (1).

3. Air supply device (1) according to Claim 1 or 2, **characterized in that** the measuring device (32) has a temperature sensor (33) and/or a moisture sensor (34), and the measured second state value of the compressed air is an absolute or relative moisture content (F, RF) and/or a temperature (T).

4. Air supply device (1) according to one of the preceding claims, **characterized in that** a first non-return valve (12), which is transmissive in the delivery direction, is provided between the air dryer (5) and a multi-circuit protection valve (6) for the connection of compressed air consumer circuits (9a, b, c, d), and the measuring device (32) is connected to a line (7) between the air dryer (5) and the first non-return valve (12).

5. Air supply device (1) according to Claim 4, **characterized in that** said device has a return line (17) for returning air in the regeneration phase, wherein the return line (17) is connected between a valve (16) which is opened in the regeneration phase and the line (7), and has a second non-return valve (19) which is transmissive in the regeneration phase and is closed in the delivery phase, wherein the measuring device (32) is arranged in a rear line region (7b) of the line (7) between a connecting point (17a) of the return line (17) to the line (7) and the first non-return valve (12).

6. Air supply device (1) according to one of the preceding claims, **characterized in that** the control device (20) compares a chronological behaviour of the second measurement signal (S4) with a reference curve (K2) which is formed from the comparison with the pressure-measurement signal (S3) and/or stored data, and assesses the state of the measuring device (32) on the basis of this comparison.

7. Air supply device according to Claim 6, **characterized in that** in the case of a deviation of the second measurement signal (S4) from the reference curve (K2) the control device checks whether one of the following deviations or superimposition of the following deviations has occurred:
a curve (K4) which is shifted additively by an offset,
a delayed curve (K3) which has a delayed start of a change in the signal and/or a relatively large period of time of the change in the signal with substantially identical starting values and end values to those of the reference curve (K2), and/or
a curve (K5) with a factorial deviation which has a substantially identical factorial deviation in the determined time period to that of the reference curve (K2).

8. Air supply device according to Claim 6 or 7, **characterized in that** the control device (20) checks whether the picked-up second measurement signal (S4) has a deviation from the reference curve (K2) within a predefined tolerance range, and in the event of the deviation being outside the tolerance range said control device (20) checks whether compensation or adjustment can be carried out for the second measurement signal (S4).

9. Air supply device according to one of Claims 6 to 8, **characterized in that** the pressure sensor (30) is provided upstream of the first non-return valve (12) in the delivery direction, wherein the chronological behaviour of the pressure-measurement signal (S3) can be used as an ideal curve (K1) from which the reference curve (K2) can be formed via a delay.

10. Air supply device according to one of Claims 1 to 8, **characterized in that** the pressure sensor (30a) is provided downstream of the first non-return valve (12) in the delivery direction, and the control device (20) uses the pressure-measurement signal (S3) to determine an ideal curve (K1) before the initiation of the regeneration phase.

11. Air supply device according to one of the preceding claims, **characterized in that** the control device (20) uses the time (t1) of the outputting of a switching signal (S1) which initiates the regeneration phase as a time (t1) of a drop in pressure as well as a change in the second measurement signal (S4) and checks what behaviour the second measurement signal (S4) has at and/or after this time (t1).

12. Compressed air system which has:
an air supply device (1) according to one of the preceding claims, and
a compressor (2) which is connected to the compressed air inlet (4) of the air supply device (1).

13. Method for checking the functional capability of a measuring device (32) for measuring a relative humidity (RF) and/or a temperature (T) and/or a relative moisture content (F) in an air supply device according to one of Claims 1 to 11, having at least the following steps:
picking up of the pressure-measurement signal (S3) of the pressure sensor (30, 30a),
picking up of a second measurement signal (S4) of the second measuring device (32), and
comparing the chronological behaviour of the second measurement signal (S4) with the pressure-measurement signal (S3).

14. Method according to Claim 13, **characterized in that** the time (t1) of initiation of a regeneration phase is also included in the assessment of the functional capability of the second measuring device (32).

15. Method according to Claim 13 or 14, **characterized in that** a reference curve (K2) which has a delay with respect to a change in the pressure-measurement signal (S3) is formed for the assessment of the functional capability of the second measuring device (32) and/or is formed from stored second measurement signals (S4) from first measurements at the start of use of the second measuring device (32).

16. Method according to one of Claims 13 to 15, **characterized in that** as a function of the comparison the second measurement signal (S4) is compensated, corrected or not used to control the operating phases.

## Revendications

1. Installation de traitement d'air (1) pour un véhicule, l'installation de traitement d'air (1) présentant :
une entrée d'air sous pression (4) pour le raccordement d'un compresseur (2),
un sécheur d'air (5) pour sécher l'air sous pression introduit par l'entrée d'air sous pression (4),
un capteur de pression (30, 30a) pour mesurer une pression d'air (P) et produire un signal de mesure de pression (S3), et
un dispositif de commande (20) pour recevoir le signal de mesure de pression (S3), et pour commander les phases de fonctionnement de l'installation de traitement d'air (1),
l'installation de traitement d'air (1) pouvant fonctionner dans au moins les phases de fonctionnement suivantes :
une phase de refoulement pour refouler l'air à une pression supérieure à travers le sécheur d'air (5) et
une phase de régénération pour régénérer le sécheur d'air (5) par échappement de l'air à une pression inférieure à travers le sécheur d'air (5),
**caractérisée en ce que**
dans une région (7) derrière le sécheur d'air (5) est prévu un dispositif de mesure (32) pour mesurer une valeur d'état, différente de la pression, de l'air sous pression et pour générer au moins un deuxième signal de mesure (S4) et envoyer le deuxième signal de mesure (S4) au dispositif de commande (20), et
le dispositif de commande (20) analyse un état du dispositif de mesure (32) à partir d'une comparaison du signal de mesure de pression (S3) et du deuxième signal de mesure (S4).

2. Installation de traitement d'air (1) selon la revendication 1, **caractérisée en ce que** le dispositif de commande (20) utilise, lors de la détermination d'une capacité fonctionnelle suffisante du dispositif de mesure (32), le deuxième signal de mesure (S4) ou un signal formé à partir du deuxième signal de mesure (S4), par exemple un signal d'abaissement du point de condensation, pour commander les phases de fonctionnement de l'installation de traitement d'air (1).

3. Installation de traitement d'air (1) selon la revendication 1 ou 2, **caractérisée en ce que** le dispositif de mesure (32) présente un capteur de température (33) et/ou un capteur d'humidité (34) et la deuxième valeur d'état mesurée de l'air sous pression est un taux absolu ou relatif d'humidité (F, RF) et/ou une température (T).

4. Installation de traitement d'air (1) selon l'une quelconque des revendications précédentes, **caractérisée en ce qu'**entre le sécheur d'air (5) et une soupape de protection pour plusieurs circuits (6) pour le raccordement de circuits consommateurs d'air sous pression (9a, b, c, d), on prévoit un premier clapet anti-retour (12) permettant le passage dans la direction de refoulement, et le dispositif de mesure (32) est raccordé à une conduite (7) entre le sécheur d'air (5) et le premier clapet anti-retour (12).

5. Installation de traitement d'air (1) selon la revendication 4, **caractérisée en ce qu'**elle présente une conduite de retour (17) pour le retour de l'air dans la phase de régénération, la conduite de retour (17) étant branchée entre une soupape (16) ouverte dans la phase de régénération et la conduite (7) et **en ce qu'**elle présente un deuxième clapet anti-retour (19) qui est perméable dans la phase de régénération et qui bloque le passage dans la phase de refoulement, le dispositif de mesure (32), dans une région de conduite arrière (7b) de la conduite (7), étant disposé entre un point de raccordement (17a) de la conduite de retour (17) à la conduite (7) et le premier clapet anti-retour (12).

6. Installation de traitement d'air (1) selon l'une quelconque des revendications précédentes, **caractérisée en ce que** le dispositif de commande (20) compare un comportement dans le temps du deuxième signal de mesure (S4) avec une courbe de référence (K2), qui est formée à partir de la comparaison avec le signal de mesure de pression (S3) et/ou les données mémorisées, et qui analyse à partir de cette comparaison l'état du dispositif de mesure (32).

7. Installation de traitement d'air selon la revendication 6, **caractérisée en ce que** le dispositif de commande, en cas d'écart du deuxième signal de mesure (S4) par rapport à la courbe de référence (K2), vérifie si l'un des écarts suivants ou une accumulation des écarts suivants a lieu :
une courbe (K4) décalée de manière additive d'une certaine valeur de décalage,
une courbe (K3) retardée dans le temps, qui présente un début, retardé dans le temps, d'une variation du signal et/ou d'un intervalle plus grand de variation du signal pour des valeurs de début et de fin sensiblement identiques à celles de la courbe de référence (K2), et/ou
une courbe (K5) avec un écart factoriel, qui présente, dans la plage temporelle déterminée, par rapport à la courbe de référence (K2), un écart factoriel sensiblement identique.

8. Installation de traitement d'air selon la revendication 6 ou 7, **caractérisée en ce que** le dispositif de commande (20) vérifie si le deuxième signal de mesure reçu (S4) présente un écart par rapport à la courbe de référence (K2) à l'intérieur d'une plage de tolérance prédéfinie et au cas où cet écart se situe en dehors de la plage de tolérance, vérifie si une compensation ou un ajustement peut être effectué(e) pour le deuxième signal de mesure (S4).

9. Installation de traitement d'air selon l'une quelconque des revendications 6 à 8, **caractérisée en ce que** le capteur de pression (30) est prévu dans la direction de refoulement avant le premier clapet anti-retour (12), le comportement dans le temps du signal de mesure de pression (S3) pouvant être utilisé en tant que courbe idéale (K1), à partir de laquelle la courbe de référence (K2) peut être créée par retard dans le temps.

10. Installation de traitement d'air selon l'une quelconque des revendications 1 à 8, **caractérisée en ce que** le capteur de pression (30a) est prévu dans la direction de refoulement derrière le premier clapet anti-retour (12) et le dispositif de commande (20) utilise le signal de mesure de pression (S3) avant l'introduction de la phase de régénération pour déterminer une courbe idéale (K1).

11. Installation de traitement d'air selon l'une quelconque des revendications précédentes, **caractérisée en ce que** le dispositif de commande (20) utilise l'instant (t1) de délivrance d'un signal de commutation (S1) lançant la phase de régénération en tant qu'instant (t1) d'une chute de pression ainsi que la variation du deuxième signal de mesure (S4) et vérifie quel comportement le deuxième signal de mesure (S4) présente à cet instant (1) ou après cet instant.

12. Système d'air sous pression, présentant :
une installation de traitement d'air (1) selon l'une quelconque des revendications précédentes, et
un compresseur (2) raccordé à l'entrée d'air sous pression (4) de l'installation de traitement d'air (1).

13. Procédé pour vérifier la fonctionnalité d'un dispositif de mesure (32) pour mesurer une humidité relative (RF) et/ou une température (T) et/ou un taux d'humidité relative (F) dans une installation de traitement d'air selon l'une quelconque des revendications 1 à 11, comprenant au moins les étapes suivantes :
réception du signal de mesure de pression (S3) du capteur de pression (30, 30a),
réception d'un deuxième signal de mesure (S4) du deuxième dispositif de mesure (32), et
comparaison du comportement dans le temps du deuxième signal de mesure (S4) avec le signal de mesure de pression (S3).

14. Procédé selon la revendication 13, **caractérisé en ce que** lors de l'évaluation de la fonctionnalité du deuxième dispositif de mesure (32), l'instant (t1) du lancement d'une phase de régénération est en outre pris en compte.

15. Procédé selon la revendication 13 ou 14, **caractérisé en ce que** pour l'évaluation de la fonctionnalité du deuxième dispositif de mesure (32), une courbe de référence (K2) est créée, laquelle présente un retard temporel par rapport à une variation du signal de mesure de pression (S3) et/ou est formée à partir de deuxièmes signaux de mesure mémorisés (S4) de premières mesures au début de l'utilisation du deuxième dispositif de mesure (32).

16. Procédé selon l'une quelconque des revendications 13 à 15, **caractérisé en ce que** le deuxième signal de mesure (S4) est compensé ou corrigé en fonction de la comparaison ou n'est pas utilisé pour commander les phases de fonctionnement.
